# EUROPÄISCHE PATENTSCHRIFT

(11) **EP 2 021 591 B1**
(45) Veröffentlichungstag und Bekanntmachung des Hinweises auf die Patenterteilung: **11.01.2017**
(21) Anmeldenummer: 07728426.3
(22) Anmeldetag: 24.04.2007
(51) Int. Cl.: F01M 13/04

(54) **ZYLINDERKOPF EINES VERBRENNUNGSMOTORS**
CYLINDER HEAD OF AN INTERNAL COMBUSTION ENGINE
CULASSE DE CYLINDRE D'UN MOTEUR À COMBUSTION INTERNE

(30) Priorität: 29.05.2006 DE 102006024817
(43) Veröffentlichungstag der Anmeldung: 11.02.2009
(73) Patentinhaber: MAHLE International GmbH, 70376 Stuttgart (DE)
(72) Erfinder: BRAUN, Mirko, 73035 Göppingen (DE); FEIL, Michael, 95444 Bayreuth (DE); HARTMANN, Edwin, 71397 Weiler zum Stein (DE); RUPPEL, Stefan, 69126 Heidelberg-Emmertsgrund (DE)
(74) Vertreter: BRP Renaud & Partner mbB Rechtsanwälte Patentanwälte Steuerberater
(86) Internationale Anmeldenummer: PCT/EP2007/053970
(87) Internationale Veröffentlichungsnummer: WO 2007/137916

(56) Entgegenhaltungen:
- DE-A1- 4 037 983
- JP-A- 1 096 410
- JP-A- 7 150 923
- JP-A- 8 284 634
- JP-A- 9 291 810
- JP-U- S5 781 415
- US-A- 4 651 704

## Beschreibung

Die Erfindung betrifft einen Zylinderkopf eines Verbrennungsmotors mit zumindest einer hohlen Nockenwelle.

Bei Verbrennungsmotoren ist es bekannt, aus dem Kurbelgehäuse sogenannte ölnebelhaltige Blow-by-Gase in eine hohle Nockenwelle einzuführen und in dieser zu zentrifugieren, so dass sich das in den Blow-by-Gasen enthaltene Öl an einer Innenwand der Nockenwelle niederschlägt. Die derart an der Innenwand der Nockenwelle abgeschiedenen Öltröpfchen bilden einen Ölfilm, der aufgrund der in der Nockenwelle herrschenden Gasströmung zu einem axial endseitigen Ausgang der Nockenwelle transportiert wird. Nachteilig bei den bekannten Systemen ist, dass das in den Blow-by-Gasen gelöste Öl nicht vollständig in der Nockenwelle abgeschieden werden kann, so dass die das Kurbelgehäuse verlassenen Blow-by-Gase weiterhin noch einen unerwünschten Restölanteil enthalten.

Aus der JP 07150923 A ist eine als Ölnebelabscheider ausgebildete hohle Nockenwelle gezeigt. Axial endseitig dieser Nockenwelle ist dabei ein Ölnebelauslass angeordnet.

Aus der US 4,651,704 ist ebenfalls eine hohle Nockenwelle bekannt, durch welche sogenannte Blow-by-Gase abgesaugt werden. Dabei weist ein Innendurchmesser der hohlen Nockenwelle im Bereich von Nocken eine radiale Aufweitung auf, an deren Grund eine die Nockenwelle radial durchdringende Bohrung verläuft, durch welche in der Nockenwelle abgeschiedenes Öl diese verlassen kann. Eine Ansaugung von ölnebelhaltigen Blow-by-Gasen erfolgt dabei ebenfalls durch Radialbohrungen welche die Nockenwelle in einem Bereich durchdringen, in welchem ein Innendurchmesser deutlich kleiner ist als in den axial benachbarten Bereichen, so dass durch diese Bohrungen kein abgeschiedenes Öl entweichen kann.

Aus der JP 8284634 A ist ebenfalls eine als Ölnebelabscheider ausgebildete hohle Nockenwelle bekannt. Die Nockenwelle weist dabei innenliegende Lüfterflügel auf, welche eine Axialströmung von angesaugten Blow-by-Gasen innerhalb der hohlen Nockenwelle erzeugen.

Auch aus der JP 01096410 A und der JP S57-81415U ist eine hohle Nockenwelle bekannt.

Die Erfindung beschäftigt sich mit dem Problem, die Ölnebelabscheidung weiter zu verbessern, so dass die aus dem Kurbelgehäuse austretenden Blow-by-Gase einen deutlich geringeren Ölanteil aufweisen.

Gelöst wird dieses Problem durch einen Verbrennungsmotor mit sämtlichen Merkmalen des Patentanspruchs 1.

Vorteilhafte und zweckmäßige Ausgestaltungen sind Gegenstand der abhängigen Unteransprüche.

Die Erfindung beruht auf dem allgemeinen Gedanken, zusätzlich zu der hohlen Nockenwelle, welche als Ölnebelvorabscheider fungiert, einen Ölnebelnachabscheider vorzusehen, der sich axial endseitig an der Nockenwelle anschließt und die von der Nockenwelle bereits vorgereinigten Blow-by-Gase einer weiteren Reinigung unterzieht. Die Erfindung schafft dadurch ein zweistufiges Reinigungskonzept, an dessen Ende Blow-by-Gase das Kurbelgehäuse verlassen, welche im Vergleich zu bekannten Ölnebelabscheideprozessen in Nockenwellen einen deutlich reduzierten Ölanteil aufweisen. Die hohle Nockenwelle dient somit als Ölnebelvorabscheider, während sich daran anschließend der Ölnebelnachabscheider befindet.

Zweckmäßig ist der Ölnebelnachabscheider innerhalb des Kurbelgehäuses angeordnet. Diese in das Kurbelgehäuse integrierte Lage des Ölnebelnachabscheiders erlaubt eine besonders kompakte Bauweise und einhergehend damit einen geringeren Bauraumbedarf, was insbesondere bei heutigen beengten Motorräumen von großem Vorteil ist. Gleichzeitig ist der innerhalb des Kurbelgehäuses angeordnete Ölnebelnachabscheider weitestgehend vor äußeren Einflüssen geschützt, wodurch seine Lebensdauer positiv beeinflusst wird. Aufgrund der heute bekannten Herstellverfahren kann dabei eine Außenkontur bzw. eine äußere Form und Gestalt des Ölnebelnachabscheiders an nahezu jede beliebige Anforderung bezüglich des zur Verfügung stehenden Bauraumes innerhalb des Kurbelgehäuses angepasst werden, so dass der bisher axial endseitig der Nockenwelle vorhandene, nicht genutzte Bauraum nunmehr effektiv genutzt werden kann.

Bei einer vorteilhaften Weiterbildung der erfindungsgemäßen Lösung ist der Ölnebelnachabscheider als Impactor oder als Zyklon ausgebildet. Beide Arten von Ölnebelabscheidern sind aus dem Stand der Technik bekannt und haben sich bereits in der Praxis als einerseits effektiv und andererseits kostengünstig erwiesen. Dabei kann die Art des Ölnebelnachabscheiders, entweder in Form eines Impactors oder in Form eines Zyklons, in Abhängigkeit von den im Kurbelgehäuse zur Verfügung stehenden Platzverhältnissen gewählt werden, wodurch der zur Verfügung stehende Bauraum besonders effektiv genutzt werden kann.

Gemäß einer weiteren vorteilhaften Ausführungsform der erfindungsgemäßen Lösung weist der Ölnebelnachabscheider ein Tauchrohr auf, das in die hohle Nockenwelle hineinragt. Das Hineinragen des Tauchrohres in die hohle Nockenwelle erfolgt dabei vorzugsweise berührungsfrei, wobei das Hineinragen gleichzeitig eine Art Labyrinthdichtung bereitstellen kann, so dass die ölnebelhaltigen Blow-by-Gase vom Ölnebelnachabscheider ausschließlich aus der hohlen Nockenwelle angesaugt werden. Denkbar ist auf der anderen Seite aber auch, dass zwischen einer Außenumfangsfläche des Tauchrohres und einer Gegenfläche der hohlen Nockenwelle eine Ringdichtung angeordnet ist, so dass ein Gleitkontakt zwischen dem Tauchrohr und der Nockenwelle besteht. Um das Tauchrohr exakt in der hohlen Nockenwelle positionieren zu können, ist der Ölnebelnachabscheider fest mit dem Kurbelwellengehäuse verbunden, insbesondere verschraubt.

Zweckmäßig weist zumindest ein Teil einer strömungsbeaufschlagten Innenfläche eines als Zyklon oder Impaktor ausgebildeten Ölnebelnachabscheiders eine zerklüftete oder porige Oberfläche auf, die beispielsweise als Vlies oder als Gestrick ausgebildet sein kann und eine besonders effektive Abscheidung von Öl bewirkt. Eine derartige Ausbildung zumindest eines Teils der strömungsbeaufschlagte Innenfläche ist dabei kostengünstig und fertigungstechnisch einfach herzustellen und verbessert die Ölnebelabscheidung erheblich.

Vorteilhafte, nachstehend näher erläuterte Ausführungsbeispiele sind in den Zeichnungen jeweils schematisch dargestellt.

Dabei zeigen, jeweils schematisch
- Fig. 1: eine Detailansicht in das Innere eines erfindungsgemäßen Zylinderkopfs mit einem erfindungsgemäßen Ölnebelnachabscheider,
- Fig. 2: eine perspektivische Seitenansicht eines Ölnebelnachabscheiders,
- Fig. 3: eine teilweise geschnittene Darstellung des Ölnebelnachabscheiders nach Fig. 2.

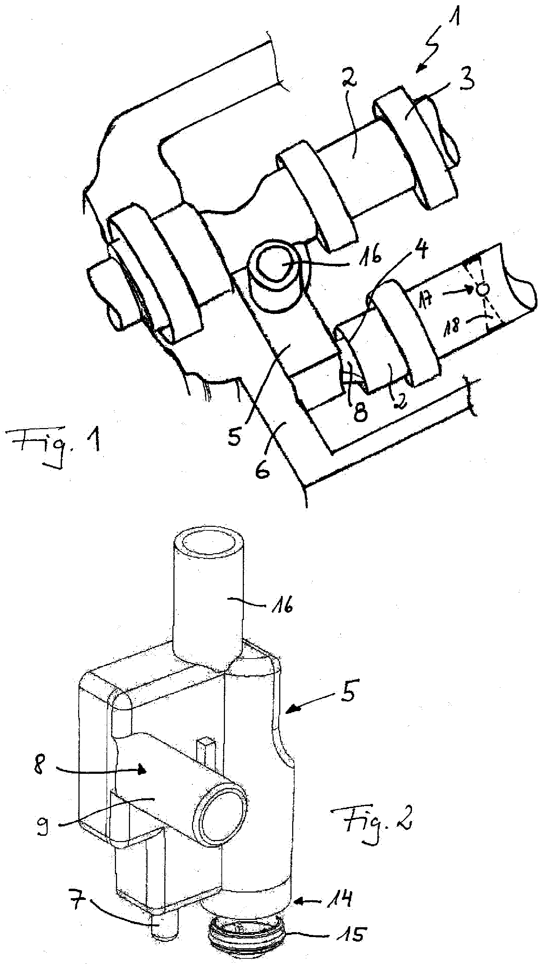

Entsprechend der Fig. 1 weist ein teilweise dargestellter Zylinderkopf 1 eines im übrigen nicht dargestellten Verbrennungsmotors zwei Nockenwellen 2 und 2' auf, wovon zumindest eine hohl ausgebildet ist und als Ölnebelvorabscheider dient. Die Nockenwelle 2 besitzt mehrere Nocken 3, mit welchen - nicht dargestellte - Ventile des Verbrennungsmotors gesteuert werden. Die hohle Ausbildung der Nockenwelle 2 erlaubt dabei einen Transport von ölhaltigen Blow-by-Gasen in deren Hohlraum, wodurch das Kurbelgehäuse entlüftet werden kann.

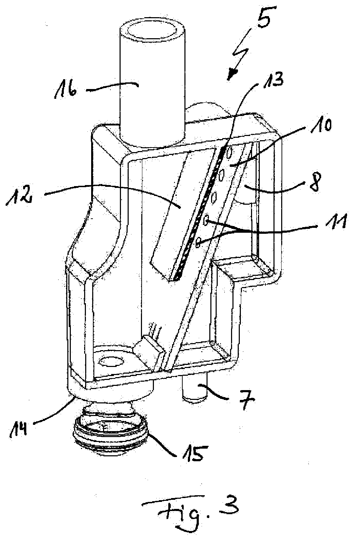

Die als Ölnebelvorabscheider ausgebildete Nockenwelle 2 bewirkt beim Betrieb des Verbrennungsmotors durch eine Drehbewegung eine Zentrifugal-Beschleunigung der im Hohlraum transportierten Blow-by-Gase, wobei in diesen aerosolgelöste Öltröpfchen radial nach außen beschleunigt werden und sich an einer Innenoberfläche der hohlen Nockenwelle 2 in Form eines Ölfilms niederschlagen. Aufgrund der Strömung der Blow-by-Gase in der hohlen Nockenwelle 2 wird der Ölfilm in Richtung eines axialen Endes 4 der Nockenwelle 2 transportiert, an welches sich ein erfindungsgemäßer Ölnebelnachabscheider 5 anschließt. Ein derartiger Ölnebelnachabscheider 5 ist gemäß den Fig. 2 und 3 im Detail dargestellt. Der Transport der Blow-by-Gase in der Nockenwelle 2 erfolgt dabei vorzugsweise durch die Erzeugung eines Unterdrucks.

Wie in Fig. 1 gezeigt, ist der Ölnebelnachabscheider 5 mit dem Kurbelgehäuse 6 bzw. dem Zylinderkopf 1 verbunden, insbesondere verschraubt. Die Verbindung kann darüber hinaus durch eine Steckverbindung stabilisiert werden, bei welcher ein Zapfen 7 des Ölnebelabscheiders 5 (vgl. Fig. 2) in eine entsprechende Ausnehmung am Kurbelgehäuse 6 bzw. am Zylinderkopf 1 eingreift. Wie ebenfalls der Fig. 1 zu entnehmen ist, ist der Ölnebelnachabscheider 5 platzsparend innerhalb des Kurbelgehäuses 6 angeordnet, so dass außerhalb des Kurbelgehäuses 6 kein zusätzlicher Platzbedarf erforderlich ist. Durch die als Ölnebelvorabscheider ausgebildete Nockenwelle 2 mit dem sich daran anschließenden Ölnebelnachabscheider 5 wird somit ein mehrstufiges Ölnebelabscheidekonzept bereitgestellt, welches eine besonders effektive Abscheidung von in den Blow-by-Gasen gelöstem Öl gewährleistet, so dass die das Kurbelgehäuse 6 verlassenden Blow-by-Gase einen besonders hohen Reinheitsgrad aufweisen.

Generell kann dabei der Ölnebelnachabscheider 5 entweder als Impactor oder als Zyklon ausgebildet sein. Bei einem als Impactor ausgebildeten Ölnebelnachabscheider 5 weist dieser ein Tauchrohr 8 auf, das wie in Fig. 1 gezeigt, in die hohle Nockenwelle 2 hineinragt. Durch das in die Nockenwelle 2 hineinragende Tauchrohr 8 bildet dieses zusammen mit der Nockenwelle 2 eine Labyrinthdichtung, welche gewährleistet, dass das zu reinigende Blow-by-Gas ausschließlich aus der Nockenwelle 2 angesaugt wird und nicht aus einem Kurbelgehäuseinnenraum. Dabei stellt selbstverständlich das Tauchrohr 8 lediglich eine mögliche Form einer Labyrinthdichtung dar, so dass auch andere Formen, beispielsweise eine Tauchhülse, welche die Nockenwelle 2 umgreift, von der Erfindung umschlossen sein sollen. Ebenfalls denkbar ist, dass zwischen einer Außenumfangsfläche 9 des Tauchrohres 8 und einer Innenfläche der hohlen Nockenwelle 2 eine Ringdichtung angeordnet ist, welche in gleitendem Kontakt entweder mit der Außenoberfläche 9 des Tauchrohres 8 oder aber mit der Innenfläche der hohlen Nockenwelle 2 steht. Derartige Ringdichtungen sind kostengünstig herzustellen und erlauben ebenfalls eine Abdichtung zwischen der Nockenwelle 2 und dem Tauchrohr 8. Selbstverständlich können auch Kombinationen einer Labyrinthdichtung und einer Ringdichtung vorgesehen sein.

Ist der Übergang zwischen der Nockenwelle 2 und dem Tauchrohr 8 als Labyrinthdichtung mit einem Ringspalt ausgebildet, so kann zusätzlich innerhalb der hohlen Nockenwelle 2 eine Lüftereinrichtung 17 vorgesehen sein, beispielsweise in der Art einer in der DE 10 2005 042 720 A1 offenbarten Lüftereinrichtung, welche im Bereich des Übergangs zwischen der Nockenwelle 2 und dem Tauchrohr 8 einen zumindest leichten Überdruck gegenüber dem im Kurbelgehäuse 6 herrschenden Druck erzeugt, so dass eine Ansaugung von Blow-by-Gasen aus dem Kurbelgehäuse 6 vermieden wird. Denkbar ist hierbei eine Lüftereinrichtung 17, die fest mit einer Innenoberfläche der hohlen Nockenwelle 2 verbundene Lüfterschaufeln 18 aufweist. Dabei ist vorzugsweise die Umdrehungszahl der Nockenwelle 2 so groß, dass ein von den mit der Nockenwelle 2 fest verbundenen Lüfterschaufeln 18 axialer Volumenstrom größer ist als ein durch das Ansaugen der Blow-by-Gase erzeugter Unterdruck.

Im Folgenden soll kurz ein als Impactor ausgebildeter Ölnebelnachabscheider 5 anhand der Fig. 2 und 3 näher erläutert werden.

Wie in Fig. 3 dargestellt, weist der Ölnebelnachabscheider 5 eine Lochwand 10 auf, welche mehrere Strömungsdüsen 11 besitzt und dadurch das durch das Tauchrohr 8 in den Ölnebelnachabscheider 5 eingetretene Blow-by-Gas beschleunigt. Die Anzahl der Strömungsdüsen 11 bzw. die Orientierung der Lochwand 10 ist dabei in Fig. 3 rein exemplarisch dargestellt, so dass auch eine andere Anzahl an Strömungsdüsen 11 bzw. eine andere Orientierung oder Ausbildung der Lochwand 10 von der Erfindung mit umfasst sein soll.

Stromab und gegenüber der Strömungsdüsen 11 ist im Ölnebelnachabscheider 5 eine Prallwand 12 vorgesehen, welche zum Auffangen von Öl ausgebildet ist. Um das Abscheiden von Öl an der Prallwand 12 zu verbessern, weist eine den Strömungsdüsen 11 bzw. der Lochwand 10 zugewandte Seite der Prallwand 12 eine zerklüftete oder porige Oberfläche auf, die beispielsweise mit einem Vlies 13 oder einem Gestrick 13 bzw. einem Gewebe versehen sein kann. Das von dem Vlies 13 bzw. der Prallwand 12 abgeschiedene Öl tropft nach Erreichen einer Sättigungsgrenze des Vlieses 13 nach unten und fließt zu einem Ablass 14, welcher gemäß Fig. 2 mit einem Ventil 15 versehen sein kann. Das Ventil 15 kann dabei beispielsweise als Rückschlagventil ausgebildet sein. Die gereinigten Blow-by-Gase verlassen den Ölnebelnachabscheider 5 über ein Auslassrohr 16.

Alternativ zu dem als Impactor ausgebildeten Ölnebelnachabscheider 5 kann wie oben erwähnt auch ein als Zyklon ausgebildeter Ölnebelnachabscheider vorgesehen sein. Bei einem derartigen Ölnebelnachabscheider wird das Öl aufgrund der Zentrifugalbeschleunigung innerhalb des Ölnebelnachabscheiders ausgeschieden, wobei zur Steigerung der Ölnebelabscheidewirkung zumindest ein Teil einer strömungsbeaufschlagten Innenfläche des als Zyklon ausgebildeten Ölnebelnachabscheiders eine raue, das heißt eine zerklüftete bzw. porige Oberfläche, aufweisen kann. Vergleichbar mit dem als Impactor ausgebildeten Ölnebelnachabscheider 5 kann dabei die poröse Oberfläche durch ein Vlies bzw. ein Gestrick oder ein Gewebe gebildet sein oder mit einem solchen belegt sein.

Alle in der Beschreibung und in den nachfolgend dargestellten Merkmale können dabei sowohl einzeln als auch in beliebiger Form miteinander erfindungswesentlich sein.

## Patentansprüche

1. Verbrennungsmotor mit einem Zylinderkopf (1) und einem Kurbelgehäuse (6), mit
- zumindest einer hohlen Nockenwelle (2), die einen Abzug für ölnebelhaltige Blow-by-Gase aus dem Kurbelgehäuse (6) bildet und zur Vorabscheidung des Ölanteils aus diesen Gasen als Ölnebelvorabscheider ausgebildet ist,
- wobei sich axial endseitig an der Nockenwelle (2) ein Ölnebelnachabscheider (5) anschließt,
- wobei der Ölnebelnachabscheider (5) innerhalb des Zylinderkopfes (1) angeordnet ist,
**dadurch gekennzeichnet,**
- **dass** der Ölnebelnachabscheider (5) ein Tauchrohr (8) aufweist, das in die hohle Nockenwelle (2) hineinragt oder eine Tauchhülse, die die Nockenwelle (2) umgreift,
- **dass** der Ölnebelnachabscheider (5) als Impactor ausgebildet ist, wobei
- der Ölnebelnachabscheider (5) Strömungsdüsen (11) aufweist, welche zur Beschleunigung des Ölnebels dient,
- stromab und gegenüber der Strömungsdüsen (11) eine Prallwand (12) zum Auffangen von Öl angeordnet ist,
- eine den Strömungsdüsen (11) zugewandte Seite der Prallwand (12) eine zerklüftete oder porige Oberfläche aufweist, die als Vlies (13) oder als Gestrick (13) ausgebildet sein kann, oder
- **dass** der Ölnebelnachabscheider (5) als Zyklon ausgebildet ist, wobei zumindest ein Teil einer strömungsbeaufschlagten Innenfläche des als Zyklon ausgebildeten Ölnebelnachabscheiders eine zerklüftete oder porige Oberfläche aufweist.

2. Verbrennungsmotor nach Anspruch 1,
**dadurch gekennzeichnet,**
**dass** der Ölnebelnachabscheider (5) mit dem Zylinderkopf (1) verbunden ist.

3. Verbrennungsmotor nach Anspruch 1 oder 2,
**gekennzeichnet durch** die Merkmale,
- das Tauchrohr (8) des Ölnebelnachabscheiders (5) bildet zusammen mit der hohlen Nockenwelle (2) eine Labyrinthdichtung oder
- zwischen einer Außenumfangsfläche (9) des Tauchrohrs (8) und einer Innenfläche der hohlen Nockenwelle (2) ist eine Ringdichtung angeordnet.

4. Verbrennungsmotor nach einem der Ansprüche 1 bis 3,
**dadurch gekennzeichnet,**
**dass** in der hohlen Nockenwelle (2) eine Lüftereinrichtung (17) zur Erzeugung eines axialen Volumenstromes angeordnet ist.

## Claims

1. Internal combustion engine with a cylinder head (1) and a crankcase (6), with
- at least one hollow camshaft (2) that forms an outlet for oil mist-containing blow-by gases from the crankshaft (6) and that is formed as oil mist pre-separator for pre-separation of the oil fraction from these gases
- whereby an oil mist post-separator (5) is connected at the axial end of the camshaft (2)
- whereby the oil mist post-separator (5) is arranged inside the cylinder head (1),
**characterised in that**
- the oil mist post-separator (5) has a dip pipe(8) that protrudes into the hollow camshaft (2) or a dip sleeve that encompasses the camshaft (2),
- the oil mist post-separator (5) is formed as an impactor, whereby:
- the oil mist post-separator (5) has flow nozzles (11) which serve to accelerate the oil mist,
- an impact surface (12) for capture of oil is arranged downstream and opposite the flow nozzles (11),
- a side of the impact surface (12) facing the flow nozzles (11) has a fissured or porous surface that can be formed as non-woven fabric (13) or as knitted fabric (13),
or
- the oil mist post-separator (5) is formed as a cyclone, whereby at least a part of a flow-impinged inner surface of the oil mist post-separator formed as a cyclone has a fissured or porous surface.

2. Internal combustion engine according to claim 1, **characterised in that** the oil mist post-separator (5) is connected with the cylinder head (1).

3. Internal combustion engine according to claim 1 or 2, **characterised by** the features,
- the dip tube (8) of the oil mist post-separator (5) forms a labyrinth seal with the hollow camshaft (2) or
- a ring seal is arranged between an outer circumferential surface (9) of the dip tube (8) and an inner surface of the hollow camshaft (2).

4. Internal combustion engine according to one of claims 1 to 3, **characterised in that** a ventilator device (17) for generating an axial volume flow is arranged in the hollow camshaft (2).

## Revendications

1. Moteur à combustion interne avec une culasse (1) et un carter de vilebrequin (6), avec :
- au moins un arbre à cames (2) creux, qui forme un évent pour la sortie hors du carter de vilebrequin (6) de gaz de fuite contenant un brouillard d'huile et qui est réalisé sous la forme d'un pré-séparateur de brouillard d'huile afin de séparer au préalable la fraction d'huile desdits gaz,
- dans lequel un post-séparateur de brouillard d'huile (5) est raccordé du côté d'une extrémité de manière axiale au niveau de l'arbre à cames (2),
- dans lequel le post-séparateur de brouillard d'huile (5) est disposé à l'intérieur de la culasse (1),
**caractérisé en ce**
- **que** le post-séparateur de brouillard d'huile (5) présente un tube plongeur (8), qui dépasse à l'intérieur de l'arbre à cames (2) creux, ou un fourreau, qui entoure l'arbre à cames (2),
- **que** le post-séparateur de brouillard d'huile (5) est réalisé sous la forme d'un impacteur, dans lequel
-- le post-séparateur de brouillard d'huile (5) présente des buses d'écoulement (11), qui servent à accélérer le brouillard d'huile,
-- un mur d'impact (12) servant à collecter l'huile est disposé en aval et en regard des buses d'écoulement (11),
-- un côté, tourné vers les buses d'écoulement (11), du mur d'impact (12) présente une surface fissurée ou poreuse, qui peut être réalisée sous la forme d'un non-tissé (13) ou sous la forme d'un tricot (13),
ou
- **que** le post-séparateur de brouillard d'huile (5) est réalisé sous la forme d'un cyclone, dans lequel au moins une partie d'une surface intérieure, soumise à l'action d'un écoulement, du post-séparateur de brouillard d'huile réalisé sous la forme d'un cyclone présente une surface fissurée ou poreuse.

2. Moteur à combustion interne selon la revendication 1,
**caractérisé en ce**
**que** le post-séparateur de brouillard d'huile (5) est relié à la culasse (1).

3. Moteur à combustion interne selon la revendication 1 ou 2,
**caractérisé par** les caractéristiques suivantes,
- le tube plongeur (8) du post-séparateur de brouillard d'huile (5) forme conjointement avec l'arbre à cames (2) creux un joint labyrinthique ou
- un joint torique est disposé entre une surface périphérique extérieure (9) du tube plongeur (8) et une surface intérieure de l'arbre à cames (2) creux.

4. Moteur à combustion interne selon l'une quelconque des revendications 1 à 3,
**caractérisé en ce**
**qu'**un système de ventilateur (17) servant à produire un flux volumique axial est disposé dans l'arbre à cames (2) creux.
